# EUROPEAN PATENT SPECIFICATION

(11) **EP 2 816 784 B1**
(45) Date of publication and mention of the grant of the patent: **23.11.2016**
(21) Application number: 13172972.5
(22) Date of filing: 20.06.2013
(51) Int. Cl.: H04M 1/02

(54) **Housing assembly for portable electronic device**
Gehäuseanordnung für tragbare elektronische Vorrichtung
Ensemble formant un boîtier pour dispositif électronique portable

(43) Date of publication of application: 24.12.2014
(73) Proprietor: King Slide Technology Co., Ltd., Kaohsiung City (TW)
(72) Inventor: Li, Shun-Ying, Kaohsiung City (TW); Lin, Shu-Chen, Kaohsiung City (TW); Chen, Shan-Yao, Kaohsiung City (TW)
(74) Representative: Viering, Jentschura & Partner mbB Patent- und Rechtsanwälte

(56) References cited:
- DE-C1- 19 618 981
- US-A1- 2004 203 518
- US-A1- 2012 236 518

## Description

### FIELD OF THE INVENTION

The present invention relates to a housing assembly for a portable electronic device.

### BACKGROUND OF THE INVENTION

The conventional housing assembly for a portable electronic device is assembled by use of screws. However, the use of screws to assemble and disassemble the housings takes time, and the screws cannot be guaranteed to be secured by the same tightening force.

U.S. Patent No. 8,164,898 B2 to Chen discloses the housing assembly which does not use screws, but the housing assembly is complicated.

U.S. Patent No. 2004/0203518 A1 to Zheng discloses an enclosure assembly for a portable electronic device comprising a cover, a plurality of latching elements and a housing.

The present invention intends to provide a housing assembly for a portable electronic device, and the assembly is more simple and easily to be assembled and disassembled.

### SUMMARY OF THE INVENTION

The present invention relates to a housing assembly for a portable electronic device and comprises a first body having a first side and a second side which is located corresponding to the first side. The first side has a first space. A second body is installed to the first body and has a first release hole and at least one first hole which is located corresponding to the first space of the first body. A first engaging member is movably located in the first space of the first body and has at least one first engaging portion which is located corresponding to the at least one first hole of the second body. The first engaging member is located corresponding to the first release hole of the second body. A first resilient member provides a force to the first engaging member to orient the first engaging member toward the first release hole of the second body. A first housing is connected to the second body and has a first side and a second side. The first side of the first housing has at least one first contact portion which is located corresponding to the at least one first engaging portion of the first engaging member. When assembling, the at least one first contact portion of the first housing contacts the at least one first engaging portion of the first engaging member. By the force of the first resilient member applied to the first engaging member, the first housing is firmly connected to the second body.

Preferably, the first space is substantially parallel to the first side of the first body and extends along the length of the first side of the first body.

Preferably, a first fixing member is disposed to the first body and has a first recess in which the first resilient member is partially received.

Preferably, the at least one first engaging portion of the first engaging member has a first contact face, and the at least one first contact portion has a second contact face which contacts the first contact face.

Preferably, one of the first contact face of the at least one first engaging portion and the second contact face of the at least one first contact portion is an inclined face.

Preferably, a first protrusion extends from a portion of the first contact face of the at least one first engaging portion and contacts the second contact face of the at least one first contact portion.

Preferably, a second protrusion extends from a portion of the second contact face of the at least one first contact portion and contacts the first contact face of the at least one first engaging portion.

Preferably, the at least one first engaging portion of the first engaging member has a first guide face, and the at least one first contact portion has a second guide face which is located corresponding to the first guide face so as to guide movement of the at least one first engaging portion of the first engaging member.

Preferably, one of the first and second guide faces is an inclined face.

Preferably, the at least one first engaging portion is a cylindrical body and the first guide face is a curved face.

Preferably, the at least one first engaging portion is a rectangular body and the first guide face is one side of the rectangular body.

Preferably, the first side of the first body has at least one first connection part. The second side of the second body has at least one second connection part. The second side of the first housing has at least one first connection portion which is connected to the at least one second connection part of the second body.

Alternatively, the present invention provides a housing assembly for a portable electronic device and comprises a first body having a first side and a second side which is located corresponding to the first side. The first side has at least one first connection part. The second side has at least one second hole. The second body has a first side and a second side, and the first and second sides of the second body located corresponding to the first and second sides of the first body respectively. The first side of the second body has a first release hole and at least one first hole. The second side of the second body has a second release hole and at least one second connection part. A first engaging member is movably connected between the first and second bodies. The first engaging member is located corresponding to the first release hole of the second body. The first engaging member has at least one first engaging portion which is located corresponding to the at least one first hole of the second body. A first resilient member provides a force to the first engaging member to orient the first engaging member toward the first release hole of the second body. A second engaging member is movably connected between the first and second bodies. The second engaging member is located corresponding to the second release hole of the second body. The second engaging member has at least one second engaging portion which is located corresponding to the at least one second hole of the first body. A second resilient member provides a force to the second engaging member to keep the second engaging member at a pre-set position. The second engaging member is located corresponding to the second release hole of the second body. A first housing is connected to the second body and has a first side and a second side. The first side of the first housing has at least one first contact portion which is located corresponding to the at least one first engaging portion of the first engaging member. The second side of the first housing has at least one first connection portion which is located corresponding to the at least one second connection part of the second body. A second housing is connected to the first body and has a first side and a second side. The first side of the second housing has at least one second connection portion which is located corresponding to the at least one first connection part of the first body. The second side of the second housing has at least one second contact portion which is located corresponding to the at least one second engaging portion of the second engaging member. When the first housing is connected to the second body, the at least one first connection portion of the first housing is connected to the at least one second connection part of the second body. The at least one first contact portion of the first housing is firmly connected to the at least one first engaging portion of the first engaging member by the force of the first resilient member applied to the first engaging member, so that the first housing is securely connected to the second body. When the second housing is connected to the first body, the at least one second connection portion of the second housing is connected to the at least one first connection part of the first body. The at least one second contact portion of the second housing is firmly connected to the at least one second engaging portion of the second engaging member by the force of the second resilient member applied to the second engaging member, so that the second housing is securely connected to the first body.

Preferably, the at least one first engaging portion of the first engaging member has a first contact face, and the at least one first contact portion has a second contact face. A first protrusion extends from a portion of the first contact face of the at least one first engaging portion. The first protrusion contacts the second contact face of the at least one first contact portion. A second protrusion extends from a portion of the second contact face of the at least one first contact portion. The second protrusion contacts the first contact face of the at least one first engaging portion.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view to show the housing assembly of the present invention;
Fig. 2 is a perspective view to show the body of the electronic device;
Fig. 3 is an exploded view to show the engaging assembly and the body of the present invention;
Fig. 4A is an exploded view to show the first engaging member and the first body of the present invention;
Fig. 4B is a cross sectional view to show that the first engaging member is installed to the body of the present invention;
Fig. 5A is an exploded view to show the second engaging member and the first body of the housing assembly of the present invention;
Fig. 5B is a cross sectional view to show that the second engaging member is installed to the body of the present invention;
Fig. 6 is an exploded view to show the first housing, the second housing and the body of the present invention;
Fig. 7A is an exploded view to show the second side of the first housing and the second body of the present invention;
Fig. 7B is a perspective view to show that the second side of the first housing is installed to the second body of the present invention;
Fig. 8A is an exploded view to show the first side of the first housing and the first engaging member on the first body of the present invention;
Fig. 8B is a perspective view to show that the first side of the first housing is connected to the first engaging member on the first body of the present invention;
Fig. 8C is a cross sectional view to show that the first side of the first housing is connected to the first engaging member on the first body of the present invention;
Fig. 9A is a perspective view to show that the first side of the first housing connected to the second embodiment of the first engaging member on the first body of the present invention;
Fig. 9B is a perspective view to show that the first side of the first housing connected to the third embodiment of the first engaging member on the first body of the present invention;
Fig. 10A shows that the first housing is connected to the body;
Fig. 10B shows that a tool is inserted into the body to disassemble the first housing from the body, and
Fig. 10C shows that the first housing is separated from the body by the inserted tool.

### DETAILED DESCRIPTION OF THE PREFERRED EMBODIMENT

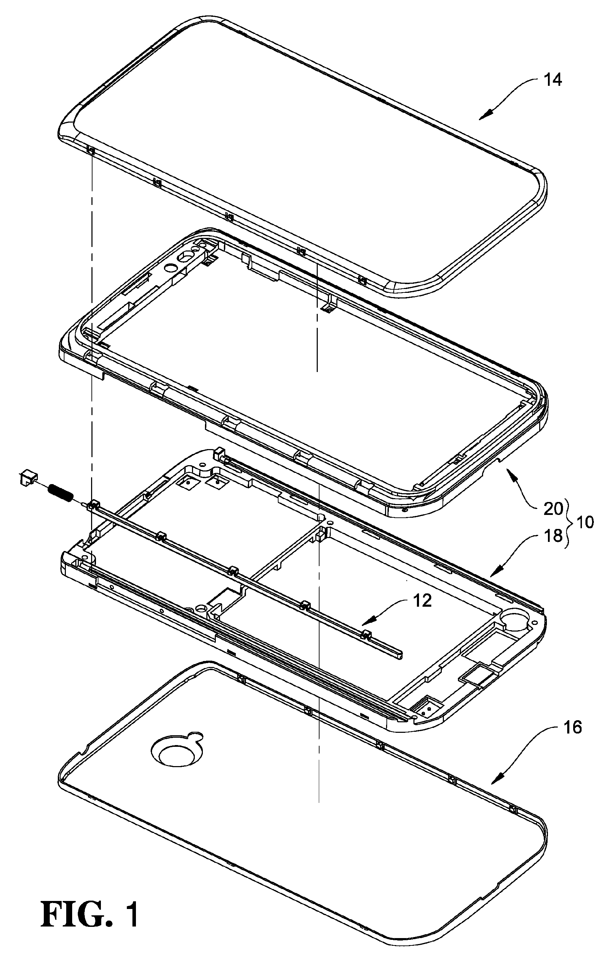

Fig. 1 shows that the present invention comprises a body 10, an engaging assembly 12, a first housing 14 and a second housing 16. The body 10 comprises a first body 18 and a second body 20.

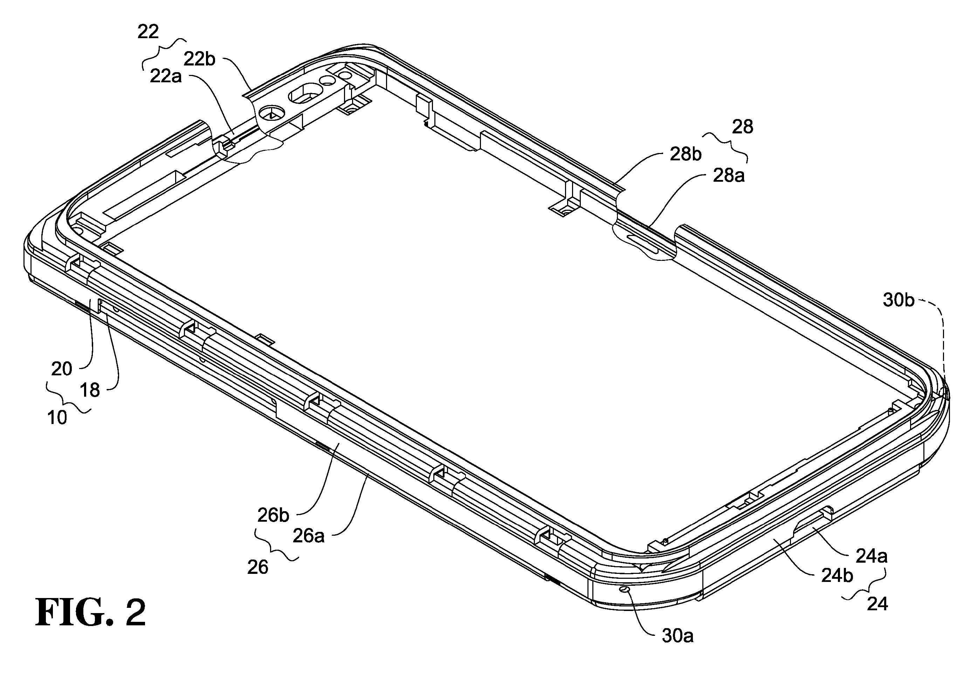

Fig. 2 shows that the body 10 comprises the first body 18 and the second body 20 which is firmly connected to the first body 18. The first body 18 has a top portion 22a, a bottom portion 24a, a first side 26a and a second side 28a which is located corresponding to the first side 26a. The second body 20 is configured to be correspondent to the first body 18, and the second body 20 has a top portion 22b, a bottom portion 24b, a first side 26b and a second side 28b which is located corresponding to the first side 26b. The top portion 22a of the first body 18 and the top portion 22b of the second body 20 form the top portion 22 of the body 10. The bottom portion 24a of the first body 18 and the bottom portion 24b of the second body 20 form the bottom portion 24 of the body 10. The first side 26a of the first body 18 and the first side 26b of the second body 20 form the first side 26 of the body 10. The second side 28a of the first body 18 and the second side 28b of the second body 20 form the second side 28 of the body 10. The first and second sides 26b, 28b of the second body 20 respectively have a first release hole 30a and a second release hole 30b for a tool to be inserted therein.

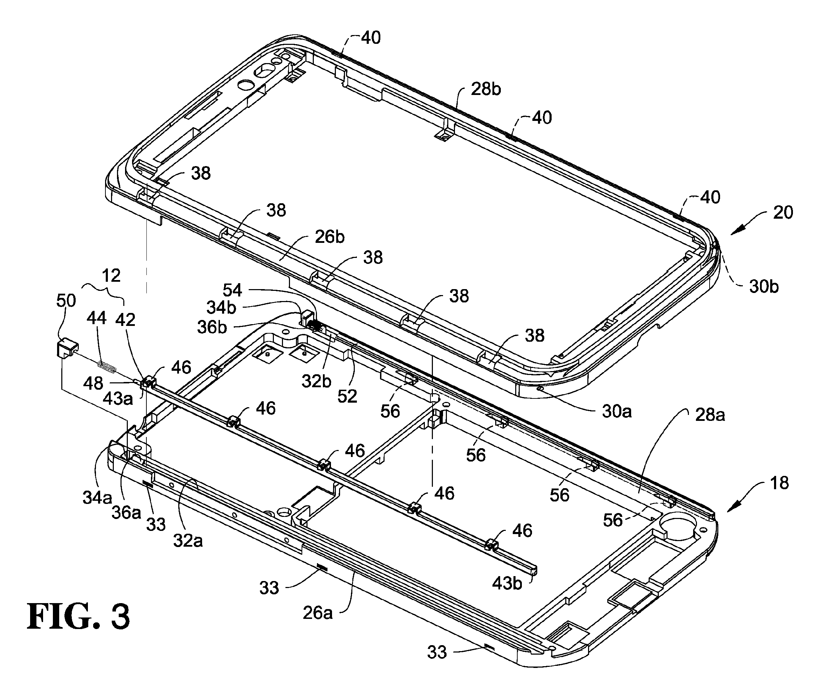

Fig. 3 shows that the first side 26a of the first body 18 has a first space 32a and at least one first connection part 33. The first space 32a is substantially parallel to the first side 26a of the first body 18. Preferably, the first space 32a extends along the length of the first side 26a of the first body 18. Preferably, the first body 18 has multiple first connection parts 33. In one embodiment, the first connection part 33 is a hole. The second side 28a of the first body 18 has a second space 32b which is substantially parallel to the second side 28a of the first body 18. Preferably, the first side 26a of the first body 18 has a first groove 34a and a first passage 36a which is connected between the first space 32a and the first groove 34a. Preferably, the second side 28a of the first body 18 has a second groove 34b and a second passage 36b which is connected between the second space 32b and the second groove 34b.

The first side 26b of the second body 20 has at least one first hole 38 which is located corresponding to the first space 32a of the first body 18. The second side 28b of the second body 20 has at least one second connection part 40. Preferably, there are multiple first holes 38 and multiple second connection parts 40 arranged on the second body 20. In one embodiment, the second connection part 40 is a hole.

The engaging assembly 12 comprises a first engaging member 42 and a first resilient member 44. The first engaging member 42 is located between the first and second bodies 18, 20. More specifically, the first engaging member 42 has a first end 43a, a second end 43b which is located corresponding to the first end 43a, and at least one first engaging portion 46 which is located corresponding to the first hole 38 of the second body 20. The first resilient member 44 is disposed between the first body 18 and the first engaging member 42. Preferably, the first end 43a of the first engaging member 42 has a projection 48 which is located corresponding to the first resilient member 44. It is noted that the projection 48 is optionally used to assist the first resilient member 44 to be disposed between the first body 18 and the first engaging member 42. The second end 43b of the first engaging member 42 is located corresponding to the first release hole 30a. Preferably, a first fixing member 50 is located corresponding to the first groove 34a of the first body 18. Preferably, the first engaging member 42 has multiple first engaging portions 46 located corresponding to the multiple first holes 38 of the second body 20.

In one preferable embodiment, the engaging assembly 12 further has a second engaging member 52 and a second resilient member 54. The second engaging member 52 is located corresponding to the second release hole 30b of the body 10. The second engaging member 52 has at least one second engaging portion 56 located in the second space 32b of the second side 28a of the first body 18. The second resilient member 54 is located between the first body 18 and the second engaging member 52. The second engaging member 52 is kept at a pre-set position and located corresponding to the second release hole 30b of the second body 20 by the force of the second resilient member 54 applied to the second engaging member 52. Preferably, the second engaging member 52 has multiple second engaging portions 56.

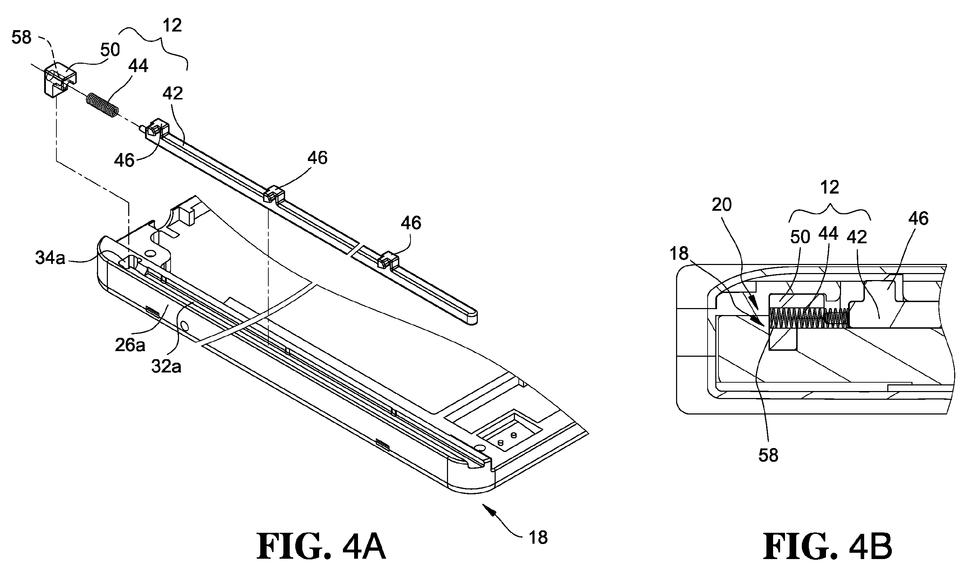

As shown in Figs. 4A and 4B, the first fixing member 50 of the engaging assembly 12 is installed to the first groove 34a of the first side 26a of the first body 18, and the first engaging member 42 is installed to the first space 32a of the first side 26a of the first body 18. The first fixing member 50 has a recess 58 for receiving a portion of the first resilient member 44. The first resilient member 44 provides a force to the first engaging member 42, and by the force, the first engaging member 42 is kept at a pre-set position.

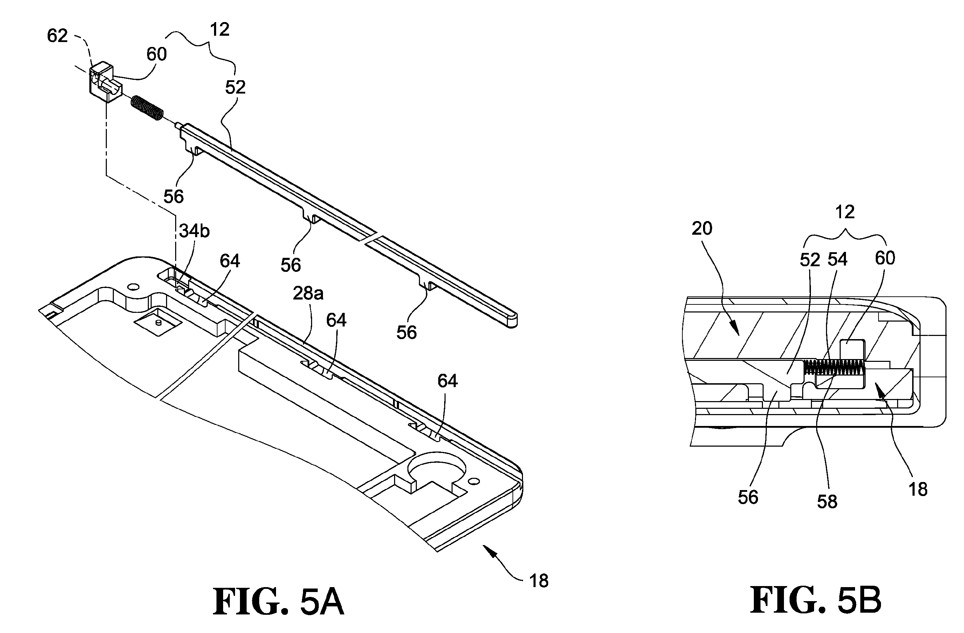

As shown in Figs. 5A and 5B, the engaging assembly 12 has a second fixing member 60 which is installed to the second groove 34b of the second side 28a of the first body 18. The second fixing member 60 has a recess 62 for receiving a portion of the second resilient member 54. The second side 28a of the first body 18 has at least one second hole 64 which is located corresponding to the second engaging portion 56 of the second engaging member 52. Preferably, there are multiple second holes 64 located in the second side 28a of the first body 18. In one embodiment, the multiple second engaging portions 56 of the second engaging member 52 are located corresponding to the multiple second holes 64 of the first body 18. The second resilient member 54 provides a force to contact the second engaging member 52, and by the force, the second engaging member 52 is kept at a pre-set position.

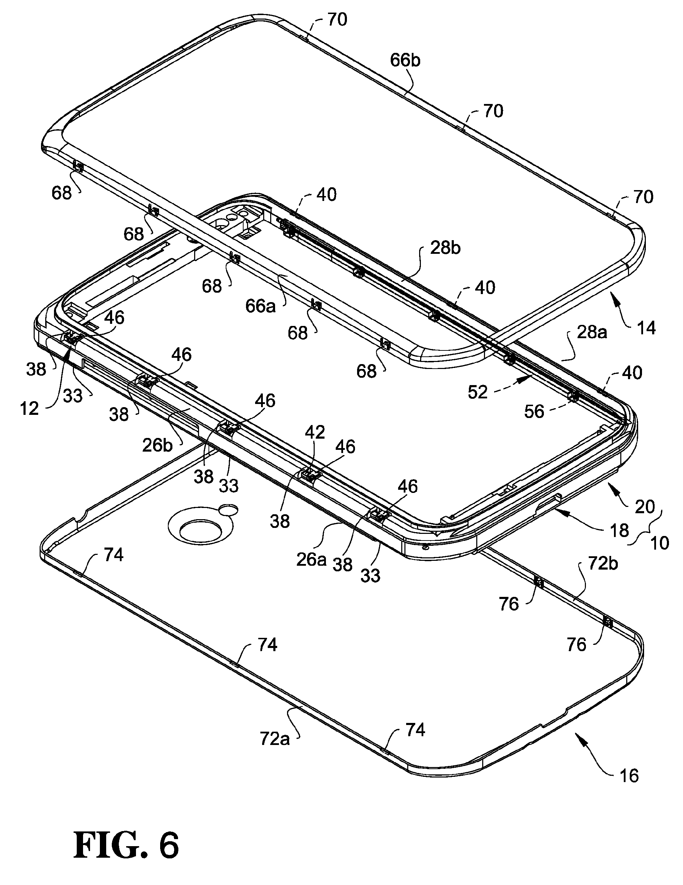

Fig. 6 shows that the engaging assembly 12 is installed between the first body 18 and the second body 20, in other words, the engaging assembly 12 is installed to the body 10. More specifically, the first engaging portions 46 of the first engaging member 42 of the engaging assembly 12 extend through the first holes 38 of the second body 20. The first housing 14 is connected to the second body 20 and the second housing 16 is connected to the first body 18. In other words, the body 10 is located between the first housing 14 and the second housing 16. The first housing 14 has a first side 66a and a second side 66b, and the first and second sides 66a, 66b are located corresponding to the first and second sides 26b, 28b of the second body 20 respectively. The first side 66a has at least one first contact portion 68 which is located corresponding to the first engaging portion 46 of the first engaging member 42. Preferably, there are multiple first contact portions 68 located on the first housing 14. The second side 66b of the first housing 14 has at least one first connection portion 70 which is located corresponding to the second connection part 40 of the second body 20. Preferably, the first housing 14 has multiple first connection portions 70.

The second housing 16 has a first side 72a and a second side 72b, the first and second sides 72a, 72b are located corresponding to the first and second sides 26a and 28a of the first body 18 respectively. The first side 72a of the second housing 16 has at least one second connection portion 74 which is located corresponding to the first connection part 33 of the first body 18. Preferably, the second housing 16 has multiple second connection portions 74. The second side 72b of the second housing 16 has at least one second contact portion 76 which is located corresponding to the second engaging portion 56 of the second engaging member 52. Preferably, the second housing 16 has multiple second contact portions 76.

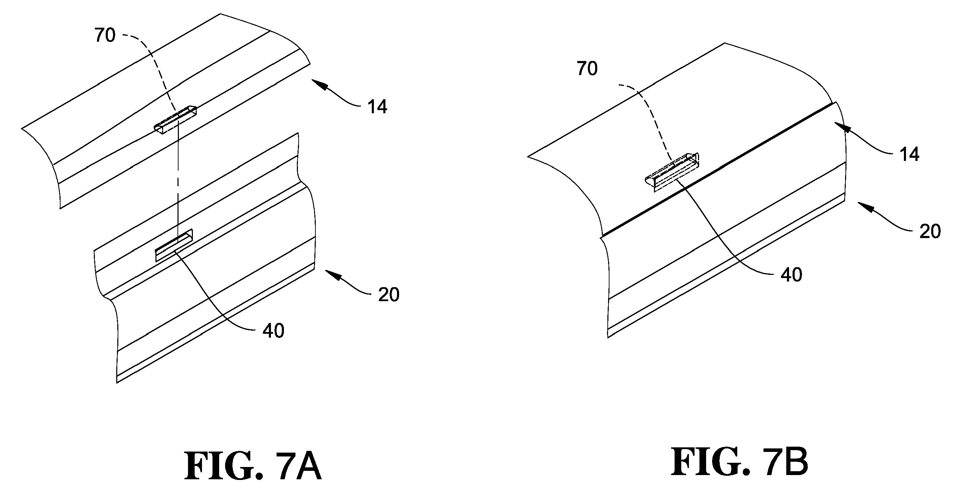

As shown in Figs. 7A and 7B, the first housing 14 has a first connection portion 70 which is engaged with the second connection part 40 of the first housing 14. Preferably, the first connection portion 70 is a protrusion such as a latch.

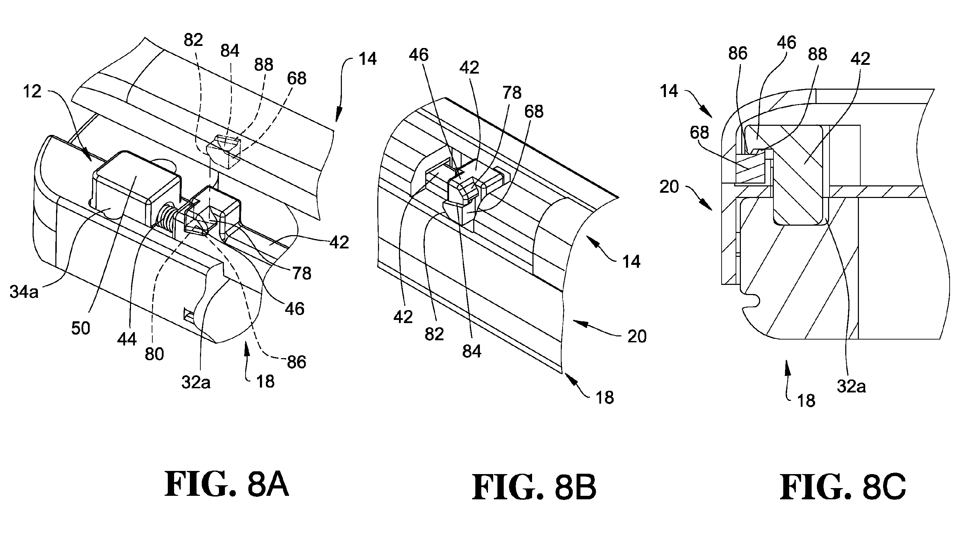

As shown in Figs. 8A, 8B and 8C, the first engaging member 42 of the engaging assembly 12 is movably located in the first space 32a of the first body 18, and the first fixing member 50 is located in the first groove 34a of the first body 18. The first resilient member 44 is disposed between the first engaging member 42 and the first fixing member 50 so as to apply a force to the first engaging member 42. More specifically, the first engaging portion 46 of the first engaging member 42 is generally formed as a triangular part and has a first guide face 78 and a first contact face 80. The first guide face 78 is located corresponding to the first contact portion 68 of the first housing 14. Preferably, the first guide face 78 is an inclined face. The first contact face 80 is located corresponding to the first space 32a of the first body 18. When assembling, the first contact portion 68 of the first housing 14 is located corresponding to the first engaging portion 46 of the first engaging member 42. When the first housing 14 is connected to the second body 20, the first connection portion 70 of the first housing 14 is connected to the second connection part 40 of the second body 20 as shown in Figs. 7A and 7B. Then, the first contact portion 68 of the first housing 14 is pushed to contact to the first engaging portion 46 of the first engaging member 42. By the contact between the first guide face 78 of the first engaging portion 46 and the first contact portion 68 of the first housing 14, the first contact portion 68 of the first housing 14 moves the first guide face 78 of the first engaging portion 46 to push/compress the first resilient member 44 until the first contact portion 68 of the first housing 14 moves over the first guide face 78 of the first engaging portion 46. Subsequently, the first resilient member 44 releases the force to move the first engaging member 42, so that the first contact face 80 of the first engaging portion 46 is engaged with the first contact portion 68 of the first housing 14 to secure the connection between the first housing 14 to the second body 20. In one embodiment, the first contact portion 68 of the first housing 14 has a second guide face 82 and a second contact face 84. The second guide face 82 is an inclined face and located corresponding to the first guide face 78 of the first engaging portion 46 so as to guide the movement of the first engaging portion 46 of the first engaging member 42 easily. The second contact face 84 contacts the first contact face 80 of the first engaging portion 46. Preferably, one of the first contact face 80 of the at least one first engaging portion 46 and the second contact face 84 of the at least one first contact portion 68 is an inclined face. Preferably, a first protrusion 86 extends from a portion of the first contact face 80 of the first contact portion 46, and the first protrusion 86 contacts the second contact face 84 of the first contact portion 68. Preferably, a second protrusion 88 extends from a portion of the second contact face 84 of the first contact portion 68, and the second protrusion 88 contacts the first contact face 80 of the at least one first engaging portion 46. By the above-mentioned arrangement, the first housing 14 can be firmly connected to the second body 20.

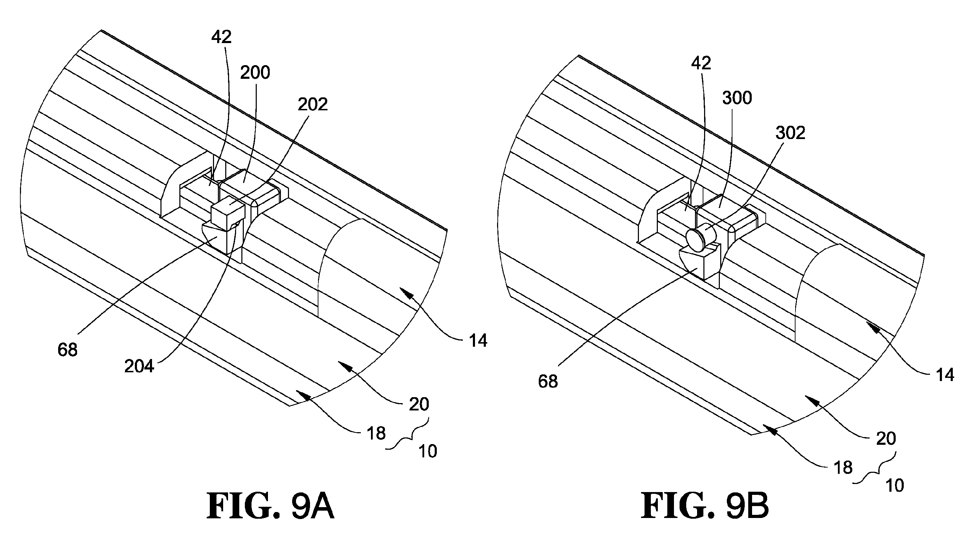

Fig. 9A shows the second embodiment of the first engaging portion 200 of the first engaging member 42. The first engaging portion 200 is generally formed as a rectangular body and has a first guide face 202 and a first contact face 204. The first guide face 202 of the first engaging portion 200 of the first engaging member 42 is one side of the rectangular body, and the first contact face 204 is a plane. Fig. 9B shows the third embodiment of the first engaging portion 300 of the first engaging member 42. The first engaging portion 300 of the first engaging member 42 is generally formed as a cylindrical body and has a first guide face 302. The first guide face 302 of the first engaging portion 300 is a curved face of the cylindrical body. When the first housing 14 is connected to the second body 20, the first guide face 302 is pushed by the first contact portion 68 to move the first engaging member 42. The first guide face 302 is then moved by the first resilient member 44 and contacts the first contact portion 68 again so as to firmly connect the first housing 14 to the second body 20. In other words, the first guide face 302 has the same function as the first contact face 80 or 204 in other embodiments.

It is noted that the first guide face 78/202/302 of the first engaging portion 46/200/300 of the first engaging member 42 can be configured to different shapes, such as a plane, an inclined face, a curved face and the combination thereof without departing the scope of the arrangement, among the second body 20, the first engaging member 42 and the first housing 16, so as to easily guide the movement of the first engaging portion 46/200/300 of the first engaging member 42 to engage with the first contact portion 68 of the first housing 14 and hence securely connect the first housing 14 to the second body 20. Similarly, the shapes of the second guide face 82 and the first and second contact faces 80 and 84 can be configured as a plane, an inclined face, a curved face and the combination thereof.

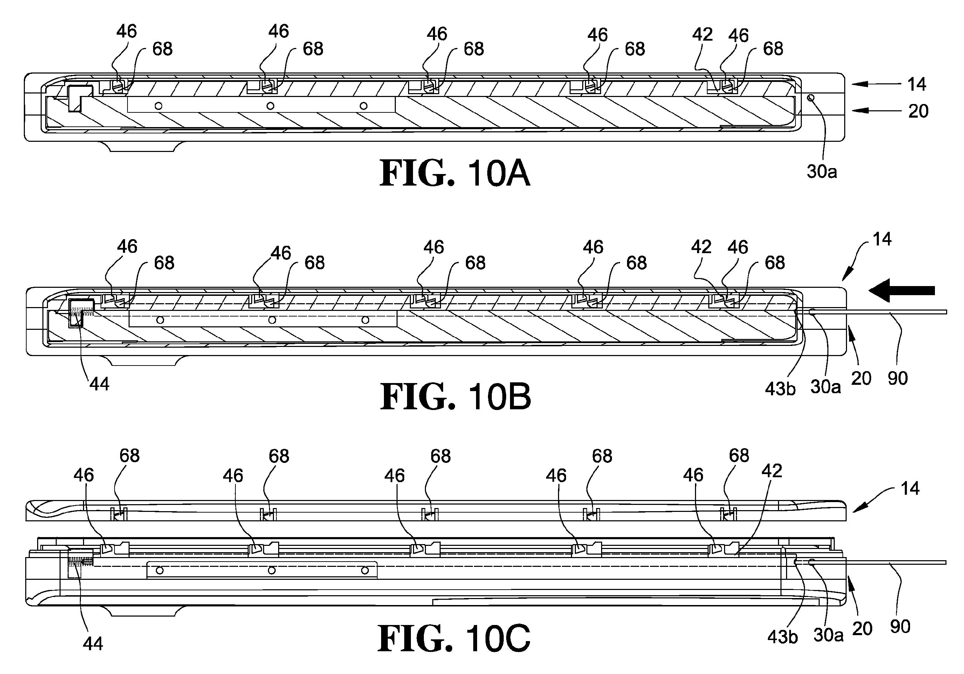

Referring to Figs. 10A, 10B and 10C, wherein Fig. 10A shows that the first housing 14 is connected to the second body 20. More specifically, the multiple first contact portions 68 of the first housing 14 are connected with the multiple first engaging portions 46 of the first engaging member 42, so that the first housing 14 is firmly connected to the second body 20. When the first housing 14 is to be disassembled from the second body 20, a tool 90 such as thin and long stick is inserted into the first release hole 30a of the body 10 and contacts the second end 43b of the first engaging member 42 which is moved by the tool 90 to overcome the force of the first resilient member 44 until the first engaging member 42 is moved and the first engaging portions 46 are separated from the first contact portions 68 of the first housing 14 (as Fig. 10B shown). Consequently, the first housing 14 can be disassembled from the second body 20, as shown in Fig. 10C.

When the tool 90 no longer pushes the first engaging member 42, the first resilient member 44 releases the force to the first engaging member 42, so that the first engaging member 42 is returned to its initial position.

It is noted that the second housing 16 has the identical functions, mechanisms, and ways of operation with the first housing 14. That is to say, the way for mounting the second housing 16 to the first body 18 or disassembling the second housing 16 from the first body 18 is the same as the interaction between the first housing 14 and the second body 20. More specifically, the first connection part 33 of the first body 18, the second engage portion 56 of the second engage member 52, and the second connection portion 74 and the second contact portion 76 of the second housing 16 can be respectively compared to the second connection part 40 of the second body 20, the first engage portion 46/200/300 of the first engage member 42, and the first connection portion 70 and the first contact portion 68 of the first housing 14. The detailed description for assembling the second housing 16 to the first body 18 is therefore omitted.

While we have shown and described the embodiment in accordance with the present invention, it should be clear to those skilled in the art that further embodiments may be made without departing from the scope of the present invention.

## Claims

1. A housing assembly for a portable electronic device comprising a first body (18) having a first side (26a) and a second side (28a) which is located corresponding to the first side (26a), the first side (26a) having a first space (32a), a second body (20) installed to the first body (18) and having at least one first hole (38) which is located corresponding to the first space (32a) of the first body (18), a first engaging member (42) movably located in the first space (32a) of the first body (18) and having at least one first engaging portion (46, 200, 300) which is located corresponding to the at least one first hole (38) of the second body (20), a first resilient member (44) providing a force to the first engaging member (42) to orient the first engaging member (42) toward the second body (20), **characterized by** a first housing (14) connected to the second body (20) and having a first side (66a) and a second side (66b), the first side (66a) of the first housing (14) having at least one first contact portion (68) which is located corresponding to the at least one first engaging portion (46, 200, 300) of the first engaging member (42); the at least one first contact portion (68) of the first housing (14) is engaged with the at least one first engaging portion (46, 200, 300) of the first engaging member (42) and the first housing (14) is firmly connected to the second body (20) by the force of the first resilient member (44) applied to the first engaging member (42), wherein the at least one first engaging portion (46, 200, 300) of the first engaging member (42) has a first contact face (80), and the at least one first contact portion (68) has a second contact face (84) which contacts the first contact face (80).

2. The assembly as claimed in claim 1, wherein the first space (32a) is substantially parallel to the first side (26a) of the first body (18) and extends along a length of the first side (26a) of the first body (18).

3. The assembly as claimed in claim 1 or 2, further comprising a first fixing member (50) which is disposed to the first body (18) and has a recess (58) in which the first resilient member (44) is partially received.

4. The assembly as claimed in claim 1, wherein one of the first contact face (80) of the at least one first engaging portion (46, 200, 300) and the second contact face (84) of the at least one first contact portion (68) is an inclined face.

5. The assembly as claimed in claim 4, further comprising a first protrusion (86) which extends from a portion of the first contact face (80) of the at least one first engaging portion (46, 200, 300) and contacts the second contact face (84) of the at least one first contact portion (68).

6. The assembly as claimed in claim 4, further comprising a second protrusion (88) which extends from a portion of the second contact face (84) of the at least one first contact portion (68) and contacts the first contact face (80) of the at least one first engaging portion (46, 200, 300).

7. The assembly as claimed in any one of claims 1-6, wherein the at least one first engaging portion (46, 200, 300) of the first engaging member (42) has a first guide face (78, 202, 302), and the at least one first contact portion (68) has a second guide face (82) which is located corresponding to the first guide face (78, 202, 302) so as to guide movement of the at least one first engaging portion (46, 200, 300) of the first engaging member (42).

8. The assembly as claimed in claim 7, wherein one of the first and second guide faces (78, 82) is an inclined face.

9. The assembly as claimed in claim 7, wherein the at least one first engaging portion (300) is a cylindrical body, and the first guide face (302) is a curved face.

10. The assembly as claimed in claim 7, wherein the at least one first engaging portion (200) is a rectangular body, and the first guide face (202) is one side of the rectangular body.

11. The assembly as claimed in any one of claims 1-10, wherein the first side (26a) of the first body (18) has at least one first connection part (33), the second side (28b) of the second body (20) has at least one second connection part (40), the second side (66b) of the first housing (14) has at least one first connection portion (70) which is engaged with the at least one second connection part (40) of the second body (20).

12. The assembly as claimed in claim 11, further comprising a second housing (16) having a first side (72a) and a second side (72b), the first side (72a) of the second housing (16) having at least one second contact portion (76) which is located corresponding to the at least one first connection part (33) of the first body (18).

13. The assembly as claimed in claim 1, wherein the first side (26a) of the first body (18) has at least one first connection part (33), the second side (28a) of the first body (18) has and at least one second hole (64), the second body (20) has a first side (26b) and a second side (28b), the first and second sides (26b, 28b) of the second body (20) are located corresponding to the first and second sides (26a, 28a) of the first body (18) respectively, the first side (26b) of the second body (20) provides a first release hole (30a) and the at least one first hole (38), the second side (28b) of the second body (20) has a second release hole (30b) and at least one second connection part (40), a second engaging member (52) is movably connected between the first and second bodies (18, 20), the second engaging member (52) is located corresponding to the second release hole (30b) of the second body (20), the second engaging member (52) has at least one second engaging portion (56) which is located corresponding to the at least one second hole (64) of the first body (18), a second resilient member (54) provides a force to the second engaging member (52) to keep the second engaging member (52) at a pre-set position, the second engaging member (52) is located corresponding to the second release hole (30b) of the second body (20), the second side (66b) of the first housing (14) has at least one first connection portion (70) which is located corresponding to the at least one second connection part (40) of the second body (20), a second housing (16) is connected to the first body (18) and has a first side (72a) and a second side (72b), the first side (72a) of the second housing (16) has at least one second connection portion (74) which is located corresponding to the at least one first connection part (33) of the first body (18), the second side (72b) of the second housing (16) has at least one second contact portion (76) which is located corresponding to the at least one second engaging portion (56) of the second engaging member (52); when the first housing (14) is connected to the second body (20), the at least one first connection portion (70) of the first housing (14) is engaged with the at least one second connection part (40) of the second body (20), the at least one first contact portion (68) of the first housing (14) is firmly engaged with the at least one first engaging portion (46, 200, 300) of the first engaging member (42) by the force of the first resilient member (44) applied to the first engaging member (42), so that the first housing (14) is securely connected to the second body (20); and when the second housing (16) is connected to the first body (18), the at least one second connection portion (74) of the second housing (16) is engaged with the at least one first connection part (33) of the first body (18), the at least one second contact portion (76) of the second housing (16) is firmly engaged with the at least one second engaging portion (56) of the second engaging member (52) by the force of the second resilient member (54) applied to the second engaging member (52), so that the second housing (16) is securely connected to the first body (18).

14. The assembly as claimed in claim 13, wherein the at least one first engaging portion (46, 200, 300) of the first engaging member (42) has a first contact face (80), the at least one first contact portion (68) has a second contact face (84), a first protrusion (86) extends from a portion of the first contact face (80) of the at least one first engaging portion (46, 200, 300), the first protrusion (86) contacts the second contact face (84) of the at least one first contact portion (68), a second protrusion (88) extends from a portion of the second contact face (84) of the at least one first contact portion (68), the second protrusion (88) contacts the first contact face (80) of the at least one first engaging portion (46, 200, 300).

## Patentansprüche

1. Ein Gehäuseaufbau für ein tragbares elektronisches Gerät, umfassend eine erste Gehäusehälfte (18) mit einer ersten Seite (26a) und einer zweiten Seite (28a), die in Übereinstimmung mit der ersten Seite (26a) angeordnet ist; die erste Seite (26a) mit einem ersten Hohlraum (32a) gebildet ist; eine zweite Gehäusehälfte (20) an der ersten Gehäusehälfte (18) installiert und mit mindestens eine ersten Loch (38) gebildet ist, das in Übereinstimmung mit dem ersten Hohlraum (32a) der ersten Gehäusehälfte (18) gebildet ist; ein erstes Einrastglied (42), das beweglich im ersten Hohlraum (32a) der ersten Gehäusehälfte (18) angeordnet ist und mindestens ein erstes Einrastteil (46, 200, 300) aufweist, der in Übereinstimmung mit dem mindestens einen ersten Loch (38) der zweiten Gehäusehälfte (20) gebildet ist; mit einer ersten Feder (44) eine Kraft auf das erste Einrastglied (42) ausgeübt wird, um das erste Einrastglied (42) auf die zweite Gehäusehälfte (20) zu auszurichten, **dadurch gekennzeichnet, dass** ein erstes Gehäuse (14) an der zweiten Gehäusehälfte (20) befestigt ist und eine erste Seite (66a) sowie eine zweite Seite (66b) aufweist; die erste Seite (66a) des ersten Gehäuses (14) mindestens einen ersten Kontaktteil (68) aufweist, der in Übereinstimmung mit dem mindestens einen ersten Einrastteil (46, 200, 300) des ersten Einrastgliedes (42) angeordnet ist; der mindestens eine erste Kontaktteil (68) des ersten Gehäuses (14) mit dem mindestens einen ersten Einrastteil (46, 200, 300) des ersten Einrastgliedes (42) in Eingriff ist, während das erste Gehäuse (14) mit der Kraft der ersten Feder (44), die auf das erste Einrastglied (42) ausgeübt wird, fest an der zweiten Gehäusehälfte (20) befestigt ist, wobei der mindestens eine erste Einrastteil (46, 200, 300) des ersten Einrastgliedes (42) eine erste Kontaktfläche (80) aufweist und der mindestens eine erste Kontaktteil (68) eine zweite Kontaktfläche (84) aufweist, die mit der ersten Kontaktfläche (80) in Berührung ist.

2. Der Aufbau nach Anspruch 1, wobei der erste Hohlraum (32a) im Wesentlichen parallel zur ersten Seite (26a) der ersten Gehäusehälfte (18) angeordnet ist und sich einer Länge der ersten Seite (26a) der ersten Gehäusehälfte (18) entlang erstreckt.

3. Der Aufbau nach Anspruch 1 oder 2, weiter umfassend einen ersten Befestigungsteil (50), der an der ersten Gehäusehälfte (18) angeordnet und mit einer Vertiefung (58) gebildet ist, in der die erste Feder (44) teilweise aufgenommen ist.

4. Der Aufbau nach Anspruch 1, wobei eine der ersten Kontaktflächen (80) des mindestens einen ersten Einrastteils (46, 200, 300) und die zweite Kontaktfläche (84) des mindestens einen ersten Kontaktteil (68) als eine abgeschrägte Fläche gebildet sind.

5. Der Aufbau nach Anspruch 4, weiter umfassend einen ersten Überstand (86), der sich von einem Teil der ersten Kontaktfläche (80) des mindestens einen ersten Einrastteils (46, 200, 300) erstreckt und mit der zweiten Kontaktfläche (84) des mindestens einen ersten Kontaktteils (68) in Berührung kommt.

6. Der Aufbau nach Anspruch 4, weiter umfassend einen zweiten Überstand (88), der sich von einem Teil der zweiten Kontaktfläche (84) des mindestens einen ersten Kontaktteils (68) erstreckt und mit der ersten Kontaktfläche (80) des mindestens einen Einrastteils (46, 200, 300) in Berührung kommt.

7. Der Aufbau nach einem der Ansprüche 1-6, wobei der mindestens eine erste Einrastteil (46, 200, 300) des ersten Einrastgliedes (42) eine erste Führungsfläche (78, 202, 302) aufweist und der mindestens eine erste Kontaktteil (68) eine zweite Führungsfläche (82) aufweist, die in Übereinstimmung mit der ersten Führungsfläche (78, 202, 302) gebildet ist, um die Bewegung des mindestens einen ersten Einrastteil (46, 200, 300) des ersten Einrastgliedes (42) zu führen.

8. Der Aufbau nach Anspruch 7, wobei eine der ersten und zweiten Führungsflächen (78, 82) als eine abgeschrägte Fläche gebildet sind.

9. Der Aufbau nach Anspruch 7, wobei der mindestens eine erste Einrastteil (300) als einen zylindrischen Körper und die ersten Führungsfläche (302) als eine gekrümmte Fläche gebildet ist.

10. Der Aufbau nach Anspruch 7, wobei der mindestens eine erste Einrastteil (200) als einen rechteckigen Körper gebildet ist, während die erste Führungsfläche (202) eine Seite des rechteckigen Körpers bildet.

11. Der Aufbau nach einem der Ansprüche 1-10, wobei die erste Seite (26a) der ersten Gehäusehälfte (18) mindestens einen ersten Verbindungsteil (33) aufweist, die zweite Seite (28b) der zweiten Gehäusehälfte (20) mindestens einen zweiten Verbindungsteil (40) aufweist; die zweite Seite (66b) des ersten Gehäuses (14) mit mindestens einem ersten Verbindungsstück (70) gebildet ist, das mit dem mindestens einem zweiten Verbindungsteil (40) der zweiten Gehäusehälfte (20) in Eingriff ist.

12. Der Aufbau nach Anspruch 11, weiter umfassend ein zweites Gehäuse (16) mit einer ersten Seite (72a) und einer zweiten Seite (72b); die erste Seite (72a) des zweiten Gehäuses (16) mindestens einen zweiten Kontaktteil (76) aufweist, der in Übereinstimmung mit dem mindestens einen ersten Verbindungsteil (33) der ersten Gehäusehälfte (18) angeordnet ist.

13. Der Aufbau nach Anspruch 1, wobei die erste Seite (26a) der ersten Gehäusehälfte (18) mindestens einen ersten Verbindungsteil (33) aufweist; die zweite Seite (28a) der ersten Gehäusehälfte (18) mit mindestens einem zweiten Loch (64) gebildet ist; die zweite Gehäusehälfte (20) eine erste Seite (26b) und eine zweite Seite (28b) aufweist; die erste und zweite Seite (26b, 28b) der zweiten Gehäusehälfte (20) in Übereinstimmung mit der ersten und zweiten Seite (26a, 28a) der ersten Gehäusehälfte (18) angeordnet sind; die erste Seite (26b) der zweiten Gehäusehälfte (20) mit einer ersten Ausrastöffnung (30a) und mit dem mindestens einem ersten Loch (38) gebildet ist; die zweite Seite (28b) der zweiten Gehäusehälfte (20) mit einer zweiten Ausrastöffnung (30b) und mit mindestens einem zweiten Verbindungsteil (40) gebildet ist; ein zweites Einrastglied (52) beweglich zwischen den ersten und zweiten Gehäusehälften (18, 20) befestigt ist; das zweite Einrastglied (52) in Übereinstimmung mit der zweiten Ausrastöffnung (30b) der zweiten Gehäusehälfte (20) angeordnet ist; das zweite Einrastglied (52) mindestens einen zweiten Einrastteil (56) aufweist, der in Übereinstimmung mit dem mindestens einen zweiten Loch (64) der ersten Gehäusehälfte (18) angeordnet ist; mit einer zweiten Feder (54) eine Kraft auf das zweite Einrastglied (52) ausgeübt wird, um das zweite Einrastglied (52) in einer vorbestimmten Position zu halten; das zweite Einrastglied (52) in Übereinstimmung mit der zweiten Ausrastöffnung (30b) der zweiten Gehäusehälfte (20) angeordnet ist; die zweite Seite (66b) des ersten Gehäuses (14) mindestens ein erstes Verbindungsstück (70) aufweist, das in Übereinstimmung mit dem mindestens einen zweiten Verbindungsteil (40) der zweiten Gehäusehälfte (20) angeordnet ist; ein zweites Gehäuse (16), das an der ersten Gehäusehälfte (18) befestigt ist und eine erste Seite (72a) und eine zweite Seite (72b) aufweist; die erste Seite (72a) des zweiten Gehäuses (16) mindestens ein zweites Verbindungsstück (74) aufweist, das in Übereinstimmung mit dem mindestens einen ersten Verbindungsteil (33) der ersten Gehäusehälfte (18) angeordnet ist; die zweite Seite (72b) des zweiten Gehäuses (16) mindestens einen zweiten Kontaktteil (76) aufweist, der in Übereinstimmung mit dem mindestens einen zweiten Einrastteil (56) des zweiten Einrastglied (52) angeordnet ist; beim Befestigen des ersten Gehäuses (14) an die zweite Gehäusehälfte (20) das mindestens eine erste Verbindungsstück (70) des ersten Gehäuses (14) mit dem mindestens einen zweiten Verbindungsteil (40) der zweiten Gehäusehälfte (20) in Eingriff ist; der mindestens eine erste Kontaktteil (68) des ersten Gehäuses (14) mit der Kraft der Feder (44), die auf das erste Einrastglied (42) ausgeübt wird, fest in Eingriff mit dem mindesten einen ersten Einrastteil (46, 200, 300) des ersten Einrastgliedes (42) ist, um das erste Gehäuse (14) sicher an der zweiten Gehäusehälfte (20) zu befestigen; beim Befestigen des zweiten Gehäuses (16) an der ersten Gehäusehälfte (18) das mindestens eine zweite Verbindungsstück (74) des zweiten Gehäuses (16) mit dem mindestens einen ersten Verbindungsteil (33) der ersten Gehäusehälfte (18) in Eingriff gebracht wird; der mindestens eine zweite Kontaktteil (76) des zweiten Gehäuses (16) mit der Kraft der zweiten Feder (54), die auf das zweite Einrastglied (52) ausgeübt wird, fest mit dem mindestens einen zweiten Einrastteil (56) des zweiten Einrastgliedes (52) in Eingriff gebracht wird, um das zweite Gehäuse (16) sicher an der ersten Gehäusehälfte (18) zu befestigen.

14. Der Aufbau nach Anspruch 13, wobei der mindestens eine erste Einrastteil (46, 200, 300) des ersten Einrastgliedes (42) mit einer ersten Kontaktfläche (80) gebildet ist; der mindestens eine erste Kontaktteil (68) mit einer zweiten Kontaktfläche (84) gebildet ist; ein erster Überstand (86) sich von einem Teil der ersten Kontaktfläche (80) des mindestens einen ersten Einrastteils (46, 200, 300) erstreckt; der erste Überstand (86) mit der zweiten Kontaktfläche (84) des mindestens einen ersten Kontaktteils (68) in Berührung kommt; ein zweiter Überstand (88) sich von einem Teil der zweiten Kontaktfläche (84) des mindestens einen ersten Kontaktteils (68) erstreckt; der zweite Überstand (88) mit der ersten Kontaktfläche (80) des mindestens einen ersten Einrastteils (46, 200, 300) in Berührung kommt.

## Revendications

1. Un assemblage de boîtier pour un appareil électronique portable, **caractérisé par le fait qu'**il comprend un premier corps (18) présentant un premier côté (26a) et un second côté (28a) qui est situé en correspondance avec le premier côté (26a), le premier côté (26a) présentant un premier espace (32a), un second corps (20) placé sur le premier corps (18) et présentant au moins un premier trou (38) qui est situé en correspondance avec le premier espace (32a) du premier corps (18), un premier élément d'engagement (42) situé de manière mobile dans le premier espace (32a) du premier corps (18) et présentant au moins une première partie d'engagement (46, 200, 300) qui est située en correspondance avec le ou les premiers trous (38) du second corps (20), un premier élément à effet de ressort (44) fournissant une force au premier élément d'engagement (42) pour orienter le premier élément d'engagement (42) vers le second corps (20), **caractérisé par** un premier boîtier (14) raccordé au second corps (20) et présentant un premier côté (66a) et un second côté (66b), le premier côté (66a) du premier boîtier (14) présentant au moins une première partie de contact (68) qui est située en correspondance avec la ou les premières parties d'engagement (46, 200, 300) du premier élément d'engagement (42) ; la ou les premières parties de contact (68) du premier boîtier (14) sont engagées avec la ou les premières parties d'engagement (46, 200, 300) du premier élément d'engagement (42) et le premier boîtier (14) est solidement raccordé au second corps (20) par la force du premier élément à effet de ressort (44) appliquée au premier élément d'engagement (42), dans lequel la ou les premières parties d'engagement (46, 200, 300) du premier élément d'engagement (42) présentent une première surface de contact (80), et la ou les premières parties de contact (68) présentent une seconde surface de contact (84) qui est en contact avec la première surface de contact (80).

2. L'assemblage selon la revendication 1, **caractérisée par le fait que** le premier espace (32a) est essentiellement parallèle au premier côté (26a) du premier corps (18) et se prolonge le long d'une longueur du premier côté (26a) du premier corps (18).

3. L'assemblage selon la revendication 1 or 2, **caractérisé par le fait qu'**il comprend en outre un premier élément de fixation (50) qui est placé sur le premier corps (18) et présente un évidement (58) dans lequel le premier élément à effet de ressort (44) est partialement reçu.

4. L'assemblage selon la revendication 1, **caractérisée par le fait que** l'une des premières surfaces de contact (80) de la ou des premières parties d'engagement (46, 200, 300) et la seconde surface de contact (84) de la ou des premières parties de contact (68) est une surface inclinée.

5. L'assemblage selon la revendication 4, **caractérisé par le fait qu'**il comprend en outre une première saillie (86) qui se prolonge à partir d'une partie de la première surface de contact (80) de la ou des premières parties d'engagement (46, 200, 300) et est en contact avec la seconde surface de contact (84) de la ou des premières parties de contact (68).

6. L'assemblage selon la revendication 4, **caractérisé par le fait qu'**il comprend en outre une seconde saillie (88) qui se prolonge à partir d'une partie de la seconde surface de contact (84) de la ou des premières parties de contact (68) et est en contact avec la première surface de contact (80) de la ou des premières parties d'engagement (46, 200, 300).

7. L'assemblage selon l'une quelconque des revendications 1-6, **caractérisée par le fait que** la ou les premières parties d'engagement (46, 200, 300) du premier élément d'engagement (42) présentent une première surface guide (78, 202, 302), et la ou les premières parties de contact (68) présentent une seconde surface guide (82) qui est située en correspondance avec la première surface guide (78, 202, 302) de manière à guider le déplacement de la ou des premières parties d'engagement (46, 200, 300) du premier élément d'engagement (42).

8. L'assemblage selon la revendication 7, **caractérisée par le fait que** l'une des première et seconde surfaces guide (78, 82) est une surface inclinée.

9. L'assemblage selon la revendication 7, **caractérisée par le fait que** la ou les premières parties d'engagement (300) sont un corps cylindrique, et la première surface guide (302) est une surface incurvée.

10. L'assemblage selon la revendication 7, **caractérisée par le fait que** la ou les premières parties d'engagement (200) sont un corps rectangulaire, et la première surface guide (202) est un côté du corps rectangulaire.

11. L'assemblage selon l'une quelconque des revendications 1-10, **caractérisée par le fait que** le premier côté (26a) du premier corps (18) présente au moins une première pièce de raccordement (33), le second côté (28b) du second corps (20) présente au moins une seconde pièce de raccordement (40), le second côté (66b) du premier boîtier (14) présente au moins une première partie de raccordement (70) qui est engagée avec la ou les secondes pièces de raccordement (40) du second corps (20).

12. L'assemblage selon la revendication 11, **caractérisé par le fait qu'**il comprend en outre un second boîtier (16) présentant un premier côté (72a) et un second côté (72b), le premier côté (72a) du second boîtier (16) présentant au moins une seconde partie de contact (76) qui est située en correspondance avec la ou les premières pièces de raccordement (33) du premier corps (18).

13. L'assemblage selon la revendication 1, **caractérisée par le fait que** le premier côté (26a) du premier corps (18) présente au moins une première pièce de raccordement (33), le second côté (28a) du premier corps (18) présente au moins un second trou (64), le second corps (20) présente un premier côté (26b) et un second côté (28b), les premier et second trous (26b, 28b) du second corps (20) sont situés en correspondance avec les premier et second trous (26a, 28a) du premier corps (18) respectivement, le premier côté (26b) du second corps (20) présente un premier trou de libération (30a) et le ou les premiers trous (38), le second côté (28b) du second corps (20) présente un second trou de libération (30b) et au moins une seconde pièce de raccordement (40), un second élément d'engagement (52) est raccordé de manière mobile entre les premier et second corps (18, 20), le second élément d'engagement (52) est situé en correspondance avec le second trou de libération (30b) du second corps (20), le second élément d'engagement (52) présente au moins une seconde partie d'engagement (56) qui est située en correspondance avec le ou les seconds trous (64) du premier corps (18), un second élément à effet de ressort (54) fournit une force au second élément d'engagement (52) pour garder le second élément d'engagement (52) sur une position prédéterminée, le second élément d'engagement (52) est situé en correspondance avec le second trou de libération (30b) du second corps (20), le second côté (66b) du premier boîtier (14) présente au moins une première partie de raccordement (70) qui est située en correspondance avec la ou les secondes pièces de raccordement (40) du second corps (20), un second boîtier (16) est raccordé au premier corps (18) et présente un premier côté (72a) et un second côté (72b), le premier côté (72a) du second boîtier (16) présente au moins une seconde partie de raccordement (74) qui est située en correspondance avec la ou les premières pièces de raccordement (33) du premier corps (18), le second côté (72b) du second boîtier (16) présente au moins une seconde partie de contact (76) qui est située en correspondance avec la ou les secondes parties d'engagement (56) du second élément d'engagement (52) ; lorsque le premier boîtier (14) est raccordé au second corps (20), la ou les premières parties de raccordement (70) du premier boîtier (14) sont engagées avec la ou les secondes pièces de raccordement (40) du second corps (20), la ou les premières parties de contact (68) du premier boîtier (14) sont solidement engagées avec la ou les premières parties d'engagement (46, 200, 300) du premier élément d'engagement (42) par la force du premier élément à effet de ressort (44) appliquée au premier élément d'engagement (42), de sorte que le premier boîtier (14) est raccordé de manière sûre au second corps (20) ; et lorsque le second boîtier (16) est raccordé au premier corps (18), la ou les secondes parties de raccordement (74) du second boîtier (16) sont engagées avec la ou les premières pièces de raccordement (33) du premier corps (18), la ou les secondes parties de contact (76) du second boîtier (16) sont solidement engagées avec la ou les secondes parties d'engagement (56) du second élément d'engagement (52) par la force du second élément à effet de ressort (54) appliquée au second élément d'engagement (52), de sorte que le second boîtier (16) est raccordé de manière sûre au premier corps (18).

14. L'assemblage selon la revendication 13, **caractérisée par le fait que** la ou les premières parties d'engagement (46, 200, 300) du premier élément d'engagement (42) présentent une première surface de contact (80), la ou les premières parties de contact (68) présentent une seconde surface de contact (84), une première saillie (86) se prolonge à partir d'une partie de la première surface de contact (80) de la ou des premières parties d'engagement (46, 200, 300), la première saillie (86) est en contact avec la seconde surface de contact (84) de la ou des premières parties de contact (68), une seconde saillie (88) se prolonge à partir d'une partie de la seconde surface de contact (84) de la ou des premières parties de contact (68), la seconde saillie (88) est en contact avec la première surface de contact (80) de la ou des premières parties d'engagement (46, 200, 300).
